# EUROPÄISCHE PATENTSCHRIFT

(11) **EP 1 175 678 B1**
(45) Veröffentlichungstag und Bekanntmachung des Hinweises auf die Patenterteilung: **27.11.2002**
(21) Anmeldenummer: 00934913.5
(22) Anmeldetag: 14.04.2000
(51) Int. Cl.: G11B 27/00, G11B 17/22

(54) **VERFAHREN ZUR AUSWAHL EINES SPEICHERMEDIUMS**
METHOD FOR SELECTING A STORAGE MEDIUM
PROCEDE DE SELECTION D'UN SUPPORT DE MEMORISATION

(30) Priorität: 27.04.1999 DE 19919032
(43) Veröffentlichungstag der Anmeldung: 30.01.2002
(73) Patentinhaber: ROBERT BOSCH GMBH, 70442 Stuttgart (DE)
(72) Erfinder: BECKER, Volker, D-31139 Hildesheim (DE)
(86) Internationale Anmeldenummer: DE0001166
(87) Internationale Veröffentlichungsnummer: WO00065593

(56) Entgegenhaltungen:
- EP-A- 0 342 002
- DE-A- 19 651 411
- GB-A- 2 030 754
- US-A- 4 314 366
- US-A- 4 538 253
- PATENT ABSTRACTS OF JAPAN vol. 1999, no. 03, 31. März 1999 (1999-03-31) & JP 10 340516 A (SONY CORP), 22. Dezember 1998 (1998-12-22)

## Beschreibung

### Stand der Technik

Die Erfindung geht von einem Verfahren nach der Gattung des Hauptanspruchs aus.

Aus dem Blaupunkt Katalog "Sound und Fahrvergnügen pur. Mobile Kommunikation von Blaupunkt. Programm '96/'97" ist beispielsweise der Kompakt-Disc-Wechsler CDC-F 05 bekannt, bei dem bis zu zehn verschiedene Kompakt-Discs einem Abspielgerät zum Auslesen und Wiedergeben von gespeicherten Daten zugeordnet und in einem Magazin ablegbar sind. Dabei läßt sich eine Kompakt-Disc beispielsweise zum Abspielen im zugeordneten Abspielgerät auswählen.

EP-A-0342 002, die als nächstliegender Stand der Technik angesehen wird, beschreibt ein Verfahren zur Auswahl eines Speichermediums in einem Wechslersystem mit einem Abspielgerät und einem Vorratsspeicher für Speicherplatten. Für die Platten wird jeweils eine Abspielwahrscheinlichkeit ermittelt und die Platte mit der geringsten Wahrscheinlichkeit wird, wenn eine Ausschubariforderung vorliegt, aus dem System freigegeben.

### Vorteile der Erfindung

Das erfindungsgemäße Verfahren mit den Merkmalen des Hauptanspruches hat demgegenüber den Vorteil, daß für die Speichermedien jeweils eine Abspielwahrscheinlichkeit ermittelt wird und daß das Speichermedium mit der geringsten Abspielwahrscheinlichkeit zum Ausschub aus dem Abspielgerät oder aus dem Vorratsspeicher freigegeben wird. Auf diese Weise wird die Entscheidung über den Ausschub eines nicht mehr benötigten Speichermediums automatisiert. Der Aufwand für einen Benutzer, sich über die im Vorratsspeicher befindlichen Speichermedien zu informieren, um dann ein nicht mehr benötigtes Speichermedium auszuwählen und zum Ausschub freigeben zu können, entfällt dadurch. Dem Benutzer bleibt es daher erspart, sich beispielsweise mit Hilfe einer Benamung der Speichermedien im Vorratsspeicher, eines jeweiligen Anspielens der einzelnen Speichermedien oder gar der versuchsweisen Entnahme einzelner Speichermedien und anschließender Überprüfung einer Beschriftung auf dem jeweiligen Speichermedium einen Überblick über die im Vorratsspeicher abgelegten Speichermedien zu verschaffen und das nicht mehr benötigte Speichermedium für den Ausschub auszuwählen. Somit wird der Bedienungsaufwand für den Ausschub eines nicht mehr benötigten Speichermediums erheblich reduziert.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es dabei, daß eine Ausschubanforderung erzeugt wird, wenn der Vorratsspeicher zur Ablage der Speichermedien voll ist und wenn, vorzugsweise mittels eines Näherungssensors, detektiert wird, daß ein weiteres Speichermedium in das Abspielgerät oder in den Vorratsspeicher eingeschoben werden soll. Auf diese Weise wird der Bedienungsaufwand für den Benutzer gänzlich auf dessen eigentliche Absicht, ein neues Speichermedium einzuschieben, beschränkt. Bei einem bereits vollständig gefüllten Vorratsspeicher muß vor dem Einschieben eines weiteren Speichermediums ein nicht mehr benötigtes Speichermedium nicht mehr vom Benutzer selbst für den Ausschub ausgewählt werden.

Ein weiterer Vorteil besteht darin, daß die Abspielwahrscheinlichkeit in Abhängigkeit der Zeit ermittelt wird, die das jeweilige Speichermedium dem Abspielgerät zum Auslesen und Wiedergeben von gespeicherten Daten zugeordnet war, und daß die Abspielwahrscheinlichkeit für dieses Speichermedium desto geringer ermittelt wird, je größer diese Zeit war. Auf diese Weise kann grundsätzlich das zuerst in den Vorratsspeicher oder das Abspielgerät eingeschobene Speichermedium auch zuerst wieder herausgeschoben werden. Das am längsten im Vorratsspeicher bzw. im Abspielgerät befindliche Speichermedium kann somit am ehesten wieder ausgeschoben werden.

Ein weiterer Vorteil besteht darin, daß die Abspielwahrscheinlichkeit in Abhängigkeit der Häufigkeit ermittelt wird, mit der gespeicherte Daten des jeweiligen Speichermediums vom Abspielgerät ausgelesen und wiedergegeben wurden, und daß die Abspielwahrscheinlichkeit für dieses Speichermedium desto größer ermittelt wird, je größer diese Häufigkeit ist. Auf diese Weise kann ein bevorzugtes Speichermedium mit der größten Abspielhäufigkeit vom Ausschubvorgang ausgespart werden.

Ein weiterer Vorteil besteht darin, daß länger zurückliegende Auslese- und Wiedergabevorgänge bei der Ermittlung der Häufigkeit geringer bewertet werden. Auf diese Weise kann die geschichtliche Entwicklung der Abspielhäufigkeit aller im Abspielgerät befindlichen Speichermedien berücksichtigt werden. Dadurch werden Trends in der Abspielhäufigkeit erkannt und als Ausschubkriterium mit herangezogen. Dies kann auch dazu führen, daß ein bevorzugtes Speichermedium irgendwann zum Ausschub freigegeben wird, ohne daß dessen Abspielhäufigkeit von anderen Speichermedien übertroffen werden muß, nämlich dann, wenn die Bevorzugung des entsprechenden Speichermediums bereits eine Weile zurückliegt.

Ein weiterer Vorteil besteht darin, daß bei Nichtentnahme eines zum Ausschub für eine vorgegebene Zeit freigegebenen Speichermediums oder bei Wiedereinschub eines solchen Speichermediums ein von diesem Speichermedium verschiedenes Speichermedium mit der nächstgrößten Abspielwahrscheinlichkeit zum Ausschub freigegeben wird. Auf diese Weise kann der Wunsch des Benutzers berücksichtigt werden, das vom Abspielgerät zum Ausschub freigegebene Speichermedium weiterhin im Abspielgerät bzw. im Vorratsspeicher abzulegen, so daß die Auswahl des auszuschiebenden Speichermediums an die Bedürfnisse des Benutzers angepaßt wird.

Ein weiterer Vorteil besteht darin, daß die Nichtentnahme eines zum Ausschub für eine vorgegebene Zeit freigegebenen Speichermediums oder der Wiedereinschub eines solchen Speichermediums gespeichert wird, daß die Abspielwahrscheinlichkeit für dieses Speichermedium in Abhängigkeit der gespeicherten Nichtentnahme oder des gespeicherten Wiedereinschubs ermittelt wird und daß die Abspielwahrscheinlichkeit für dieses Speichermedium bei Nichtentnahme oder Wiedereinschub größer ermittelt wird. Auf diese Weise wird dem Wunsch des Benutzers, ein zum Ausschub vorgeschlagenes Speichermedium weiterhin im Abspielgerät bzw. im Vorratsspeicher abzulegen auch für zukünftige Auswahlvorgänge berücksichtigt, in dem die Abspielwahrscheinlichkeit für das entsprechende Speichermedium entsprechend dem Benutzerverhalten angepaßt wird.

Ein weiterer Vorteil besteht darin, daß an einer Bedienvorrichtung eingeleitete Auswahlvorgänge für den Ausschub von Speichermedien gespeichert werden und daß die Abspielwahrscheinlichkeiten für die Speichermedien in Abhängigkeit der gespeicherten Auswahlvorgänge ermittelt werden. Auf diese Weise kann die Strategie des Benutzers beobachtet werden, wobei das Abspielgerät bei der Auswahl des für einen Ausschub vorgesehenen Speichermediums vom individuellen Auswahlverhalten des Benutzers lernen und dieses nachahmen kann. Auf diese Weise wird das Verfahren zur Auswahl eines Speichermediums mit der Zeit immer mehr an die Bedürfnisse des Benutzers angepaßt und dadurch optimiert.

### Zeichnung

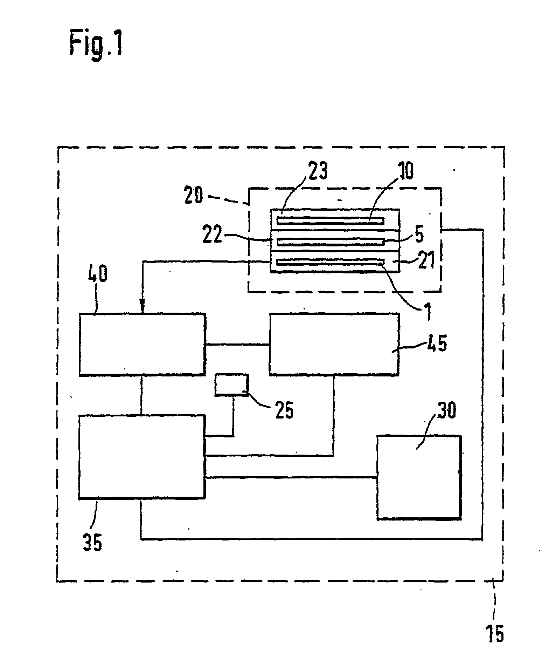

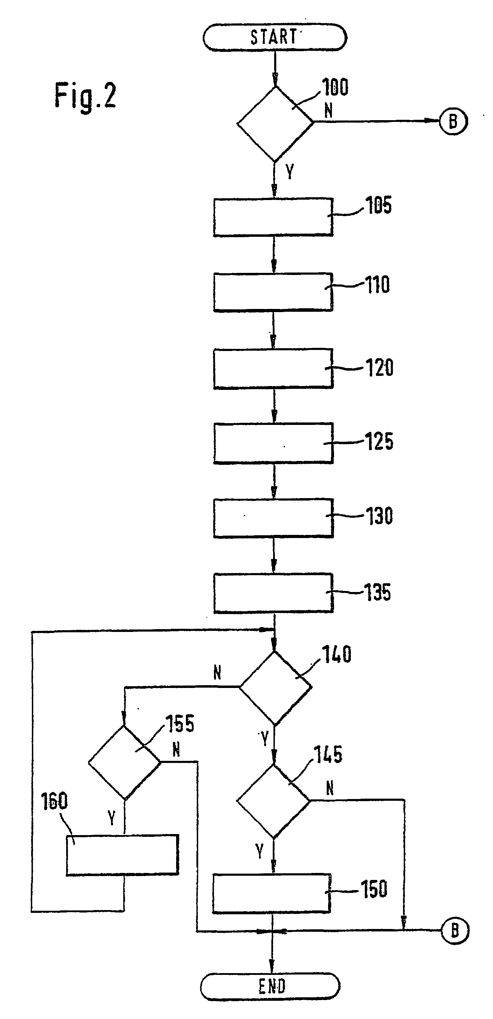

Ein Ausführungsbeispiel der Erfindung ist in der Zeichnung dargestellt und in der nachfolgenden Beschreibung näher erläutert. Es zeigen Figur 1 ein Blockschaltbild eines Abspielgerätes und Figur 2 einen Ablaufplan für die Realisierung des erfindungsgemäßen Verfahrens zur Auswahl eines Speichermediums.

### Beschreibung des Ausführüngsbeispiels

In Figur 1 kennzeichnet 15 ein Abspielgerät, das beispielsweise als Kompakt-Disc-Wechsler ausgebildet sein kann. Das Abspielgerät 15 umfaßt einen Vorratsspeicher 20, der beispielsweise als Magazin eines Kotnpakt-Disc-Wechslers ausgebildet sein kann. Der Vorratsspeicher 20 umfaßt einen ersten Speicherplatz 21, einen zweiten Speicherplatz 22 und einen dritten Speicherplatz 23. Im ersten Speicherplatz 21 ist ein erstes Speichermedium 1 abgelegt. Im zweiten Speicherplatz 22 ist ein zweites Speichermedium 5 abgelegt. Im dritten Speicherplatz 23 ist ein drittes Speichermedium 10 abgelegt. Die Speichermedien 1, 5, 10 können beispielsweise als optische Speicherplatten bzw. als Kompakt-Discs oder als
CD-ROM's oder als digitale Videoplatten oder DVD's ausgebildet sein. Bei den Speichermedien 1, 5, 10 kann es sich jedoch auch um magnetische Speicherplatten handeln, wobei das Abspielgerät 15 dann als Abspielgerät für magnetische Speicherplatten ausgebildet ist. Der Vorratsspeicher 20 ist einerseits mit einer Abspieleinheit 40 zum Abspielen eines Speichermediums und andererseits mit einer Steuerung 35 verbunden. An die Steuerung 35 ist außerdem ein Näherungssensor 25, eine Speichereinheit 45 und eine Bedienvorrichtung 30 angeschlossen. Die Abspieleinheit 40 ist ebenfalls an die Steuerung 35 angeschlossen und außerdem mit der Speichereinheit 45 verbunden. Der Näherungssensor 25 ist in der Nähe eines in Figur 1 nicht dargestellten Eingabeschachtes des Abspielgerätes 15 bzw. des Vorratsspeichers 20 angeordnet. Der Abspieleinheit 40 kann jeder der drei Speicherplätze 21, 22, 23 zugeordnet werden. Gemäß Figur 1 ist die Zuordnung des ersten Speicherplatzes 21 zur Abspieleinheit 40 dargestellt.

Mittels der Bedienvorrichtung 30 kann ein Benutzer des Abspielgerätes 15 eines der Speichermedien 1, 5, 10 zum Auslesen und zur Wiedergabe von darauf gespeicherten Daten mittels der Abspieleinheit 40 auswählen. Dabei soll beispielhaft das erste Speichermedium 1 im ersten Speicherplatz 21 vom Benutzer ausgewählt worden sein. Das erste Speichermedium 1 wird dann vom ersten Speicherplatz 21 des Vorratsspeichers 20 zur Abspieleinheit 40 transportiert und dort abgelegt, so daß es von einer in Figur 1 nicht dargestellten Lesevorrichtung der Abspieleinheit 40 ausgelesen und mittels einer in Figur 1 ebenfalls nicht dargestellten Wiedergabevorrichtung wiedergegeben werden kann. Bei der Wiedergabevorrichtung kann es sich dabei um eine optische Anzeigevorrichtung und/oder mindestens einen Lautsprecher handeln, je nachdem, ob Audio- und/oder Videodaten vom ersten Speichermedium 1 gelesen werden. Es kann vorgesehen sein, die Häufigkeit, mit der die Speichermedien 1, 5, 10 zum Auslesen und Wiedergeben von gespeicherten Daten ausgewählt werden, in der Speichereinheit 45 zu speichern. Zusätzlich oder alternativ kann in der Speichereinheit 45 gespeichert werden, in welcher Reihenfolge die Speichermedien 1, 5, 10 in das Abspielgerät 15 bzw. den Vorratsspeicher 20 eingegeben wurden. Es kann außerdem vorgesehen sein, daß der Benutzer mittels der Bedienvorrichtung ein Speichermedium auf einem Speicherplatz des Vorratsspeichers 20 zum Ausschub aus dem Abspielgerät 15 bzw. aus dem Vorratsspeicher 20 über den in der Figur 1 nicht dargestellten Eingabeschacht auswählen kann. Bei einer solchen Auswahl kann der Benutzer sich beispielsweise an einer zuvor mittels der Bedienvorrichtung 30 durchgeführten Benamung der Speichermedien 1, 5, 10 im Vorratsspeicher 20 orientieren, sofern eine in Figur 1 nicht dargestellte und mit der Steuerung 35 verbundene Anzeigevorrichtung vorgesehen ist, an der die Namen der Speichermedien 1, 5, 10 jeweils dargestellt werden können. Die Auswahl kann seitens des Benutzers auch dadurch erfolgen, daß die einzelnen Speichermedien 1, 5, 10 nacheinander zum Anspielen, d. h. zum teilweisen Auslesen und Wiedergeben der Abspieleinheit 40 zugeführt werden, so daß der Benutzer anhand der zumindest teilweisen Wiedergabe der auf dem jeweiligen Speichermedium 1, 5, 10 gespeicherten Daten die Auswahl des auszuschiebenden Speichermediums vornehmen kann. Weiterhin könnte die Auswahl mittels eines in Figur 1 nich dargestellten Ausschubbedienelementes der Bedienvorrichtung 30 erfolgen, durch dessen Betätigung die Speichermedien 1, 5, 10 nacheinander vom Abspielgerät 15 bzw. vom Vorratsspeicher 20 ausgeschoben werden können, so daß der Benutzer die Auswahl anhand der Beschriftung des jeweiligen Speichermediums treffen und die nicht ausgewählten Speichermedien wieder in das Abspielgerät 15 bzw. den Vorratsspeicher 20, der zusammen mit der Abspieleinheit 40, beispielsweise als Kompakt-Disc-Wechsler, auch außerhalb des Abspielgerätes 15 angeordnet sein kann, einschieben kann.

Es kann dabei vorgesehen sein, die an der Bedienvorrichtung 30 vom Benutzer eingeleiteten Auswahlvorgänge für den Ausschub von Speichermedien 1, 5, 10 zu registrieren und durch die Steuerung 35 veranlaßt in der Speichereinheit 45 zu speichern, so daß in der Speichereinheit 45 sozusagen die vom Benutzer durchgeführten Auswahl Vorgänge für den Ausschub von Speichermedien 1, 5, 10 gespeichert sind.

Das Abspielgerät 15 weist nun eine Funktion auf, mittels der ein Speichermedium 1, 5, 10, das im Vorratsspeicher 20 oder in der Abspieleinheit 40 abgelegt ist, automatisch, d. h. ohne Auswahl seitens des Benutzers zum Ausschub ausgewählt wird. Dazu wird für jedes der Speichermedien 1, 5, 10 eine Abspielwahrscheinlichkeit ermittelt. Das Speichermedium mit der geringsten Abspielwahrscheinlichkeit wird dann zum Ausschub aus dem Abspielgerät 15 oder aus dem Vorratsspeicher 20 freigegeben. Gemäß Figur 1 soll dabei das erste Speichermedium 1 die geringste Abspielwahrscheinlichkeit aufweisen und zum Ausschub aus dem Abspielgerät 15 bzw. aus dem Vorratsspeicher 20 freigegeben werden, wie durch den entsprechenden Pfeil in Figur 1 angedeutet ist. Die Freigabe des ersten Speichermediums 1 kann dabei für den Fall erfolgen, daß eine Ausschubanforderung vorliegt. Das Vorliegen einer Ausschubanforderung kann auch Voraussetzung für die Berechnung der Abspielwahrscheinlichkeiten der einzelnen Speichermedien 1, 5, 10 durch die Steuerung 35 sein. In dem vorliegenden Ausführungsbeispiel werden zwei verschiedene Möglichkeiten zur Erzeugung einer solchen Ausschubanforderung beschrieben. Durch eine charakteristische Betätigung, beispielsweise für eine vorgegebene Mindestdauer, des in Figur 1 nicht dargestellten Ausschubbedienelementes der Bedienvorrichtung 30 oder durch Betätigung eines weiteren Ausschubbedienelementes, beispielsweise in Form einer Taste, der Bedienvorrichtung 30 kann dabei eine entsprechende Ausschubanforderung erzeugt werden. Bei einem vom Abspielgerät 15 abgesetzten Vorratsspeicher 20 kann ein entsprechendes Ausschubbedienelement auch am Vorratsspeicher 20 vorgesehen sein.

Eine weitere Möglichkeit zur Erzeugung der Ausschubanforderung kann beispielsweise mittels des Näherungssensors 25 realisiert werden. Für den Fall, daß der Näherungssensor 25 in der Nähe des Eingabeschachtes am Abspielgerät 15 bzw. am Vorratsspeicher 20 detektiert, daß ein weiteres Speichermedium in das Abspielgerät 15 bzw. in den Vorratsspeicher 20 eingeschoben werden soll, indem das weitere Speichermedium in die Nähe des entsprechenden Eingabeschachtes und damit in den Wirkungsbereich des Näherungssensors 25 gebracht wird, wird automatisch die Ausschubanforderung erzeugt, sofern außerdem der Vorratsspeicher 20 zur Ablage der Speichermedien 1, 5, 10 voll ist. Der Vorratsspeicher 20 wird dabei auch dann als voll detektiert, wenn sich im Abspielgerät 15 eine der Anzahl der Speicherplätze 21, 22, 23 des Vorratsspeichers 20 entsprechende Anzahl von Speichermedien 1, 5, 10 im Abspielgerät 15 befindet, wobei auch mindestens einer der Speicherplätze 21, 22, 23 leer sein kann und das entsprechende Speichermedium beispielsweise in der Abspieleinheit 40 zum Auslesen und zur Wiedergabe vorliegt. Der Vorratsspeicher 20 kann dabei auch mehr oder weniger als drei Speicherplätze 21, 22, 23 aufweisen.

Für die Bestimmung der Abspielwahrscheinlichkeit der einzelnen Speichermedien 1, 5, 10 können verschiedene Kriterien einzeln oder auch in Kombination miteinander vorgesehen werden. Dabei kann die Abspielwahrscheinlichkeit in Abhängigkeit der Zeit ermittelt werden, die das jeweilige Speichermedium 1, 5, 10 dem Abspielgerät 15 zum Auslesen und Wiedergeben von gespeicherten Daten zugeordnet war. Dies ist dann möglich, wenn in der Speichereinheit 45 die Reihenfolge des Einschubs der Speichermedien 1, 5, 10 in das Abspielgerät 15 bzw. in den Vorratsspeicher 20 gespeichert ist. Das zuerst eingeschobene Speichermedium war dabei dem Abspielgerät 15 am längsten zugeordnet. Die Abspielwahrscheinlichkeit für das jeweilige Speichermedium 1, 5, 10 wird dabei von der Steuerung 35 ermittelt und ist desto geringer, je größer diese Zeit war, bzw. je früher das entsprechende Speichermedium 1, 5, 10 in das Abspielgerät 15 bzw. in den Vorratsspeicher 20 eingeschoben wurde.

Zusätzlich oder alternativ kann die Abspielwahrscheinlichkeit in Abhängigkeit der Häufigkeit ermittelt werden, mit der gespeicherte Daten des jeweiligen Speichermediums 1, 5, 10 vom Abspielgerät 15 ausgelesen und wiedergegeben wurden. Voraussetzung dafür ist, daß die entsprechenden Häufigkeiten oder Abspielzeitpunkte ebenfalls in der Speichereinheit 45 gespeichert sind. Die in der Steuerung 35 ermittelte Abspielwahrscheinlichkeit wird dabei für das jeweilige Speichermedium 1, 5, 10 desto größer sein, je größer diese Häufigkeit ist.

Länger zurückliegende Auslese- und Wiedergabevorgänge können dabei zusätzlich für die Ermittlung der Häufigkeit geringer bewertet werden. Auf diese Weise wird die geschichtliche Entwicklung der Abspielhäufigkeit aller im Abspielgerät 15 befindlichen Speichermedien 1, 5, 10 berücksichtigt, sofern die entsprechenden Abspielzeitpunkte dieser Speichermedien 1, 5, 10 in der Speichereinheit 45, die dazu vorzugsweise als nichtflüchtiger Speicher ausgebildet ist, abgelegt sind. Somit können von der Steuerung 35 Trends in der Abspielhäufigkeit erkannt und als Ausschubkriterium mit herangezogen werden.

Zusätzlich oder alternativ zu den beschriebenen Kriterien für die Bestimmung der Abspielwahrscheinlichkeit kann es für den Fall, daß in der Speichereinheit 45 auch die an der Bedienvorrichtung 30 eingeleiteten Auswahlvorgänge des Benutzers für den Ausschub von Speichermedien 1, 5, 10 gespeichert sind, vorgesehen sein, die Abspielwahrscheinlichkeiten für die Speichermedien 1, 5, 10 in Abhängigkeit dieser gespeicherten Auswahlvorgänge zu ermitteln. Somit kann die Steuerung 35 die Strategie des Benutzers für die Auswahl von Speichermedien zum Ausschub beobachten und von diesem individuellen Auswahlverhalten des Benutzers lernen, so daß die von der Steuerung 35 durchgeführte Auswahl mit der Zeit immer mehr den Bedürfnissen des Benutzers angepaßt und somit optimiert wird.

Bei Vorliegen der Ausschubanforderung wird von der Steuerung 35 dasjenige Speichermedium 1, 5, 10 zum Ausschub freigegeben, das die geringste Abspielwahrscheinlichkeit aufweist. Die Freigabe erfolgt dabei vorzugsweise für eine vorgegebene Zeit. Gemäß Figur 1 soll beispielsweise das erste Speichermedium 1 die geringste Abspielwahrscheinlichkeit aufweisen und somit freigegeben werden. Wird das erste Speichermedium 1 nach der vorgegebenen Zeit nicht entnommen oder wieder in das Abspielgerät 15 bzw. den Vorratsspeicher 20 eingeschoben, so erkennt die Steuerung 35, daß ihre Auswahl vom Benutzer nicht akzeptiert wurde und gibt ein von dem ersten Speichermedium 1 verschiedenes Speichermedium 5, 10 mit der nächstgrößten Abspielwahrscheinlichkeit zum Ausschub frei. Dabei kann zusätzlich vorgesehen sein, daß die Nichtentnahme eines zum Ausschub für eine vorgegebene Zeit freigegebenen Speichermediums 1, 5, 10 oder der Wiedereinschub eines solchen Speichermediums 1, 5, 10 in der Speichereinheit 45 gespeichert wird und daß die Abspielwahrscheinlichkeit in Abhängigkeit der gespeicherten Nichtentnahme oder des gespeicherten Wiedereinschubes für dieses Speichermedium 1, 5, 10 durch die Steuerung 35 ermittelt wird, wobei die Abspielwahrscheinlichkeit für dieses Speichermedium 1, 5, 10 bei gespeicherter Nichtentnahme oder Wiedereinschub größer ist. Dabei kann auch die Anzahl von Nichtentnahmen oder Wiedereinschüben des entsprechenden Speichermediums 1, 5, 10 in der Speichereinheit 45 gespeichert werden, wobei die Abspielwahrscheinlichkeit von der Steuerung 35 für das entsprechende Speichermedium 1, 5, 10 größer ermittelt wird, wenn eine größere Anzahl von Nichtentnahmen oder Wiedereinschüben gespeichert wurde.

Auch auf diese Weise paßt die Steuerung 35 ihr Auswahlverfahren an die Bedürfnisse des Benutzers an, indem sie dessen Ablehnung ihrer Auswahlvorschläge bei der Ermittlung der Abspielwahrscheinlichkeiten für die Speichermedien 1, 5, 10 berücksichtigt.

Es kann weiterhin in Analogie zum Kriterium der Häufigkeit für das Auslesen und Wiedergeben eines Speichermediums 1, 5, 10 vorgesehen sein, länger zurückliegende Nichtentnahmen oder Wiedereinschübe bei der Ermittlung der Abspielwahrscheinlichkeit geringer zu bewerten. Dazu muß entsprechend die geschichtliche Entwicklung der Nichtentnahmen oder Wiedereinschübe aller im Abspielgerät 15 bzw. im Vorratsspeicher 20 befindlichen Speichermedien 1, 5, 10 in der Speichereinheit 45 abgelegt sein, so daß auf diese Weise ebenfalls Trends bei der Nichtentnahme oder dem Wiedereinschub von Speichermedien 1, 5, 10 erkannt und als Ausschubkriterium mit herangezogen werden können.

Für den Fall, daß die Steuerung 35 für mehr als ein Speichermedium die geringste Abspielwahrscheinlichkeit, d. h. also gleiche geringste Abspielwahrscheinlichkeiten für diese Speichermedien ermittelt, wählt die Steuerung 35 zufällig eines dieser Speichermedien für den Ausschub aus.

Gemäß Figur 2 ist ein Ablaufplan für die Funktionsweise der Steuerung 35 dargestellt, wobei beispielhaft eine Berücksichtigung aller genannten Kriterien für die Ermittlung der Abspielwahrscheinlichkeit vorgesehen ist. Bei einem Programmpunkt 100 prüft die Steuerung 35, ob eine Ausschubanforderung vorliegt. Ist dies der Fall, so wird zu einem Programmpunkt 105 verzweigt, andernfalls wird das Programm verlassen. Bei Programmpunkt 105 ermittelt die Steuerung 35 aus der Speichereinheit 45 die Zeiten, die das jeweilige Speichermedium 1, 5, 10 dem Abspielgerät 15 zum Auslesen und Wiedergeben von gespeicherten Daten zugeordnet war. Anschließend wird zu einem Programmpunkt 110 verzweigt. Bei Programmpunkt 110 ermittelt die Steuerung 35 aus der Speichereinheit 45 die Häufigkeiten, mit der gespeicherte Daten des jeweiligen Speichermediums 1, 5, 10 vom Abspielgerät 15 ausgelesen und wiedergegeben wurden. Dabei entnimmt sie der Speichereinheit 45 auch die Zeitpunkte für die zur Ermittlung der Häufigkeiten erforderlichen Ausleseund Wiedergabevorgänge. Bei der Berechnung der Häufigkeiten für die einzelnen Speichermedien 1, 5, 10 werden dabei länger zurückliegende Auslese- und Wiedergabevorgänge von der Steuerung 35 geringer bewertet. Anschließend wird zu einem Programmpunkt 120 verzweigt. Bei Programmpunkt 120 ermittelt die Steuerung 35 aus der Speichereinheit 45 die an der Bedienvorrichtung 30 eingeleiteten Auswahlvorgänge für den Ausschub der einzelnen Speichermedien 1, 5, 10. Falls in der Speichereinheit 45 auch die Zeitpunkte für die vom Benutzer an der Bedienvorrichtung 30 eingeleiteten Auswahlvorgänge für den Ausschub der einzelnen Speichermedien 1, 5, 10 gespeichert sind, können diese Zeitpunkte zusätzlich zur Bewertung der von der Steuerung 35 ermittelten Auswahlvorgänge berücksichtigt werden, wobei länger zurückliegende Auswahlvorgänge geringer bewertet werden. Anschließend wird zu einem Programmpunkt 125 verzweigt. Bei Programmpunkt 125 ermittelt die Steuerung 35 aus der Speichereinheit 45 die Nichtentnahmen von zum Ausschub für eine vorgegebene Zeit freigegebenen Speichermedien 1, 5, 10 oder die Wiedereinschübe von solchen Speichermedien 1, 5, 10. Sind in der Speichereinheit 45 auch die Zeitpunkte für die Nichtentnahmen oder Wiedereinschübe gespeichert, so können zusätzlich die von der Steuerung 35 ermittelten Nichtentnahmen oder Wiedereinschübe in Abhängigkeit der ermittelten Zeitpunkte bewertet werden, wobei länger zurückliegende Nichtentnahmen oder Wiedereinschübe geringer bewertet werden. Anschließend wird zu einem Programmpunkt 130 verzweigt. Bei Programmpunkt 130 ermittelt die Steuerung 35 in Abhängigkeit der zuvor ermittelten Kriterien die Abspielwahrscheinlichkeit für die einzelnen Speichermedien 1, 5, 10 in der zuvor beschriebenen Weise. Anschließend wird zu einem Programmpunkt 135 verzweigt. Bei Programmpunkt 135 gibt die Steuerung 35 dasjenige Speichermedium mit der geringsten Abspielwahrscheinlichkeit für eine vorgegebene Zeit frei. Anschließend wird zu einem Programmpunkt 140 verzweigt. Bei Programmpunkt 140 prüft die Steuerung 35, ob das freigegebene Speichermedium innerhalb der vorgegebenen Zeit vom Benutzer entnommen wurde oder nicht wieder eingeschoben wurde. Ist dies der Fall, so wird zu einem Programmpunkt 145 verzweigt, andernfalls wird zu einem Programmpunkt 155 verzweigt. Bei Programmpunkt 145 prüft die Steuerung 35, ob ein weiteres Speichermedium zum Einschub in das Abspielgerät 15 bzw. in den Vorratsspeicher 20 durch den Näherungssensor 25 oder auf sonstige Weise detektiert wurde. Ist dies der Fall, so wird zu Programmpunkt 150 verzweigt, andernfalls wird das Programm verlassen. Bei Programmpunkt 150 veranlaßt die Steuerung 35 den Einzug des in den Eingabeschacht des Abspielgerätes 15 bzw. des Vorratsspeichers 20 eingeführten weiteren Speichermediums. Anschließend wird das Programm verlassen. Bei Programmpunkt 155 prüft die Steuerung 35, ob ein Speichermedium mit einer größeren Abspielwahrscheinlichkeit im Vorratsspeicher 20 bzw. im Abspielgerät 15 vorhanden ist. Ist dies der Fall, so wird zu einem Programmpunkt 160 verzweigt, andernfalls wird das Programm verlassen. Bei Programmpunkt 160 gibt die Steuerung 35 das Speichermedium mit der nächstgrößten Abspielwahrscheinlichkeit zum Ausschub für die vorgegebene Zeit frei. Anschließend wird zu Programmpunkt 140 zurückverzweigt.

Der Trend bei als Kompakt-Disc-Wechslern ausgebildeten Abspielgeräten 15 geht zu immer kleineren Bauformen. Kompakt-Disc-Wechsler sind Abspielgeräte 15 für als Kompakt-Discs ausgebildete Speichermedien, bei denen die abzuspielende Kompakt-Disc automatisch aus dem Vorratsspeicher 20 in die Abspieleinheit 40 transportiert und dort abgespielt werden kann.

Aufgrund von Anforderungen der Automobilhersteller werden für die mobile Anwendung im Kraftfahrzeug derzeit Abspielgeräte 15 entwickelt, die in einem sogenannten 1-DIN-Gehäuse Platz finden. Diese besonders kleine Bauform führt zu Konstruktionen, bei denen die Kompakt-Discs direkt über einen Eingabeschacht in das Abspielgerät 15 geschoben und von dort in den entsprechenden Speicherplatz 21, 22, 23 des Vorratsspeichers 20 transportiert werden. Durch das erfindungsgemäße Verfahren muß bei einem bereits vollständig gefüllten Vorratsspeicher 20 vor dem Einschieben einer weiteren Kompakt-Disc in das Abspielgerät 15 eine nicht mehr benötigte Kompakt-Disc nicht mehr vom Benutzer für einen Ausschub ausgewählt werden, sondern wird von der Steuerung 35 automatisch für den Ausschub in Abhängigkeit ihrer Abspielwahrscheinlichkeit freigegeben.

## Patentansprüche

1. Verfahren zur Auswahl eines Speichermediums (1), insbesondere einer optischen Speicherplatte, aus einer Menge von Speichermedien (1, 5, 10), die einem Abspielgerät (15), insbesondere einem Compact-Disc Wechsler, zum Auslesen und Wiedergeben von gespeicherten Daten zugeordnet und in einem Vorratsspeicher (20) ablegbar sind, wobei für die Speichermedien (1, 5, 10) jeweils eine Abspielwahrscheinlichkeit ermittelt wird, **dadurch gekennzeichnet, daß** die Abspielwahrscheinlichkeit in Abhängigkeit der Zeit ermittelt wird, die das jeweilige Speichermedium (1, 5, 10) dem Abspielgerät (15) zum Auslesen und Wiedergeben von gespeicherten Daten zugeordnet war, und daß die Abspielwahrscheinlichkeit für dieses Speichennedium (1, 5, 10) desto geringer ermittelt wird, je größer diese Zeit war, und daß das Speichermedium (1) mit der geringsten Abspielwahrscheinlichkeit zum Ausschub aus dem Abspielgerät (15) oder aus dem Vorratsspeicher (20) freigegeben wird.

2. Verfahren nach Anspruch 1, **dadurch gekennzeichnet, daß** das Speichermedium (1) für den Fall freigegeben wird, daß eine Ausschubanforderung vorliegt.

3. Verfahren nach Anspruch 2, **dadurch gekennzeichnet, daß** die Ausschubanforderung erzeugt wird, wenn der Vorratsspeicher (20) zur Ablage der Speichermedien (1, 5, 10) voll ist und wenn, vorzugsweise mittels eines Näherungssensors (25), detektiert wird, daß ein weiteres Speichermedium in das Abspielgerät (15) oder in den Vorratsspeicher (20) eingeschoben werden soll.

4. Verfahren nach Anspruch 2 oder 3, **dadurch gekennzeichnet, daß** die Ausschubanforderung erzeugt wird, wenn eine entsprechende Bedienfunktion am Abspielgerät (15) oder am Vorratsspeicher (20), vorzugsweise durch Tastenbetätigung, aktiviert wurde.

5. Verfahren nach einem der vorherigen Ansprüche, **dadurch gekennzeichnet, daß** die Abspielwahrscheinlichkeit in Abhängigkeit der Häufigkeit ermittelt wird, mit der gespeicherte Daten des jeweiligen Speichermediums (1, 5, 10) vom Abspielgerät (15) ausgelesen und wiedergegeben wurden, und daß die Abspielwahrscheinlichkeit für dieses Speichermedium (1, 5, 10) desto größer ermittelt wird, je größer diese Häufigkeit ist.

6. Verfahren nach Anspruch 5, **dadurch gekennzeichnet, daß** länger zurückliegende Auslese- und Wiedergabevorgänge bei der Ermittlung der Häufigkeit geringer bewertet werden.

7. Verfahren nach einem der vorherigen Ansprüche, **dadurch gekennzeichnet, daß** bei Nichtentnahme eines zum Ausschub für eine vorgegebene Zeit freigegebenen Speichermediums (1) oder bei Wiedereinschub eines solchen Speichermediums (1) ein von diesem Speichermedium (1) verschiedenes Speichermedium (5, 10) mit der nächstgrößten Abspielwahrscheinlichkeit zum Ausschub freigegeben wird.

8. Verfahren nach einem der vorherigen Ansprüche, **dadurch gekennzeichnet, daß** die Nichtentnahme eines zum Ausschub für eine vorgegebene Zeit freigegebenen Speichermediums (1, 5, 10) oder der Wiedereinschub eines solchen Speichermediums (1, 5, 10) gespeichert wird, daß die Abspielwahrscheinlichkeit für dieses Speichermedium (1, 5, 10) in Abhängigkeit der gespeicherten Nichtentnahme oder des gespeicherten Wiedereinschubs ermittelt wird und daß die Abspielwahrscheinlichkeit für dieses Speichermedium (1, 5, 10) bei Nichtentnahme oder Wiedereinschub größer ermittelt wird.

9. Verfahren nach einem der vorherigen Ansprüche, **dadurch gekennzeichnet, daß** an einer Bedienvorrichtung (30) eingeleitete Auswahlvorgänge für den Ausschub von Speichermedien (1, 5, 10) gespeichert werden und daß die Abspielwahrscheinlichkeiten für die Speichermedien (1, 5, 10) in Abhängigkeit der gespeicherten Auswahlvorgänge ermittelt werden.

## Claims

1. Method for selecting a storage medium (1), particularly an optical storage disc, from a set of storage media (1, 5, 10) which are associated with a playback unit (15), particularly a compact disc changer, for reading and reproducing stored data and can be stored in a magazine store (20), with a respective playback likelihood being ascertained for the storage media (1, 5, 10), **characterized in that** the playback likelihood is ascertained on the basis of the time at which the respective storage medium (1, 5, 10) was assigned to the playback unit (15) for reading and reproducing stored data, and **in that** the playback likelihood for this storage medium (1, 5, 10) is ascertained to be less the longer ago this time was, and **in that** the storage medium (1) with the least playback likelihood is released for ejection from the playback unit (15) or from the magazine store (20).

2. Method according to Claim 1, **characterized in that** the storage medium (1) is released when there is a rejection request.

3. Method according to Claim 2, **characterized in that** the ejection request is produced if the magazine store (20) for storing the storage media (1, 5, 10) is full and if it is detected, preferably using a proximity sensor (25), that another storage medium needs to be inserted into the playback unit (15) or into the magazine store (20).

4. Method according to Claim 2 or 3, **characterized in that** the ejection request is produced if a corresponding operation function has been activated on the playback unit (15) or on the magazine store (20), preferably by a key being pressed.

5. Method according to one of the preceding claims, **characterized in that** the playback likelihood is ascertained on the basis of the frequency with which stored data on the respective storage medium (1, 5, 10) have been read and reproduced by the playback unit (15), and **in that** the playback likelihood for this storage medium (1, 5, 10) is ascertained to be greater the higher this frequency is.

6. Method according to Claim 5, **characterized in that** reading and playback operations which are longer ago are given a lower weighting when ascertaining the frequency.

7. Method according to one of the preceding claims, **characterized in that**, if a storage medium (1) released for ejection for a prescribed time is not removed or if such a storage medium (1) is pushed back in, a storage medium (5, 10) other than this storage medium (1) which has the next greatest playback likelihood is released for ejection.

8. Method according to one of the preceding claims, **characterized in that** the non-removal of a storage medium (1, 5, 10) released for ejection for a prescribed time or the pushing-back-in of such a storage medium (1, 5, 10) is stored, **in that** the playback likelihood for this storage (1, 5, 10) is ascertained on the basis of the stored non-removal or of the stored pushing-back-in, and **in that** the playback likelihood for this storage medium (1, 5, 10) is ascertained to be greater if it is not removed or if it is pushed back in.

9. Method according to one of the preceding claims, **characterized in that** selection operations initiated on a control apparatus (30) in order to eject storage media (1, 5, 10) are stored, and **in that** the playback likelihoods for the storage media (1, 5, 10) are ascertained on the basis of the stored selection operations.

## Revendications

1. Procédé de sélection d'un support d'enregistrement (1), notamment d'un disque optique dans un ensemble de supports d'enregistrement (1, 5, 10) pour un lecteur (15), notamment un changeur de disque compact, pour lire et reproduire les données enregistrées et les inscrire dans un magasin d'alimentation (20),
selon lequel on détermine chaque fois une probabilité de lecture pour les supports d'enregistrement (1, 5, 10),
**caractérisé en ce qu'**
on détermine la probabilité de lecture en fonction du temps que le support d'enregistrement respectif (1, 5, 10) a attribué au lecteur (15) pour lire et reproduire les données en mémoire et **en ce que** l'on détermine la probabilité de lecture pour ce support d'enregistrement (1, 5, 10) à un niveau d'autant plus faible que le temps était grand et que le support d'enregistrement (1) avec la plus faible probabilité de lecture a été libéré pour être éjecté du lecteur (15) ou de la mémoire d'alimentation (20).

2. Procédé selon la revendication 1,
**caractérisé en ce que**
le support d'enregistrement (1) est libéré au cas où il existe une demande d'éjection.

3. Procédé selon la revendication 2,
**caractérisé en ce qu'**
on génère la demande d'éjection si le magasin (20) dans lequel sont déposés les supports d'enregistrement (1, 5, 10) est plein et si de préférence à l'aide d'un capteur de proximité (25) on détecte qu'un autre support d'enregistrement doit être glissé dans le lecteur (15) ou dans le magasin (20).

4. Procédé selon l'une quelconque des revendications 2 ou 3,
**caractérisé en ce qu'**
on crée la demande d'éjection si une fonction de service correspondante sur le lecteur (15) ou le magasin (20) a été activée de préférence par l'intermédiaire d'une touche.

5. Procédé selon l'une quelconque des revendications précédentes,
**caractérisé en ce que**
la probabilité de lecture se détermine en fonction de la fréquence à laquelle les données mémorisées du support d'enregistrement respectif (1, 5, 10) sont lues par le lecteur (15) et sont reproduites et **en ce que** la probabilité de lecture de ce support d'enregistrement (1, 5, 10) est d'autant plus grande que cette fréquence est grande.

6. Procédé selon la revendication 5,
**caractérisé en ce que**
des opérations de sélection et de reproduction très éloignées seront pondérées à un niveau moindre pour la détermination de la fréquence.

7. Procédé selon l'une quelconque des revendications précédentes,
**caractérisé en ce qu'**
en cas de non préhension d'un support d'enregistrement (1) libéré pour être éjecté pendant une durée prédéterminée ou lors de la réintroduction d'un tel support d'enregistrement (1) on libère celui des différents supports d'enregistrement (5, 10) autre que le support (1) et qui a la probabilité de lecture la plus grande ensuite pour l'éjection.

8. Procédé selon l'une quelconque des revendications précédentes,
**caractérisé en ce que**
la non extraction d'un support d'enregistrement (5, 10) libéré pendant un temps prédéterminé pour l'éjection ou la réintroduction d'un tel support d'enregistrement (1, 5, 10) sont mises en mémoire de façon que la probabilité de lecture pour ce support d'enregistrement (1, 5, 10) soit déterminée en fonction du non prélèvement enregistré ou de la réintroduction enregistrée et la probabilité de lecture pour ce support d'enregistrement (1, 5, 10) lors du non prélèvement ou de la réintroduction est fixée à un niveau supérieur.

9. Procédé selon l'une quelconque des revendications précédentes,
**caractérisé en ce que**
les opérations de sélection pour l'éjection de support d'enregistrement (1, 5, 10) lancées par un dispositif de manoeuvre (30) sont mises en mémoire et la probabilité de lecture pour les supports d'enregistrement (1, 5, 10) se détermine en fonction des opérations de sélection mises en mémoire.
